Europäisches Patentamt

European Patent Office

Office européen des brevets

(11) Veröffentlichungsnummer: **0 102 408**
**B1**

(12) **EUROPÄISCHE PATENTSCHRIFT**

(45) Veröffentlichungstag der Patentschrift:
**01.04.87**

(51) Int. Cl.⁴: **E 02 D 31/02, E 04 B 1/70**

(21) Anmeldenummer: **82108142.9**

(22) Anmeldetag: **03.09.82**

(54) Isolierelement.

(43) Veröffentlichungstag der Anmeldung:
**14.03.84 Patentblatt 84/11**

(45) Bekanntmachung des Hinweises auf die Patenterteilung:
**01.04.87 Patentblatt 87/14**

(84) Benannte Vertragsstaaten:
**AT BE CH FR GB IT LI NL SE**

(56) Entgegenhaltungen:
**BE - A - 863 519**
**DE - A - 2 030 496**
**DE - A - 2 165 977**
**DE - A - 2 632 486**
**DE - A - 2 701 597**
**FR - A - 2 473 262**
**US - A - 4 309 855**

(73) Patentinhaber: **DOW CHEMICAL (EUROPE) S.A.,**
**Bachtobelstrasse 3, CH-8810 Horgen (CH)**

(72) Erfinder: **Michalik, Kajetan, Veilchenweg 107,**
**D-8020 Taufkirchen (DE)**

(74) Vertreter: **Wolf, Günter, Dipl.Ing., Patentanwälte**
**Dipl.-Ing. Amthor Dipl.-Ing. Wolf Postfach 70 02 45 An**
**der Mainbrücke 16, D-6450 Hanau 7 (DE)**

**Beschreibung**

Die Erfindung betrifft ein Isolierelement für insbesondere Kellergeschoss-Aussenwandverkleidungen gemäss Oberbegriff des Hauptanspruches.

Isolierelemente der genannten Art sind nach der US-A-4 309 855 bekannt. Auf der Wandanlageseite sind diese vorbekannten Isolierelemente mit vertikalen oder sich kreuzenden Nuten versehen, die mit einem Filtervlies abgedeckt sind.

Isolierelemente dieser Art und bspw. auch nach der DE-A-2 262 990 kommen in verstärktem Umfang immer mehr zur Anwendung, da heute in zunehmendem Masse auch Kellergeschossräume genutzt und beheizt werden. Aus diesem Grunde ist es von Interesse, die Kellergeschossaussenwände nicht nur feuchtigkeitsfest zu isolieren, sondern auch Massnahmen zu treffen, um eine Wärmedämmung gegenüber dem angeschütteten Boden zu erreichen. Diesen Zweck erfüllen vorbekannte Isolierelemente jeweils nur zum Teil. Soweit sie keine Drainagewirkung haben, muss deshalb vor diesen an der zu isolierenden Wandfläche dicht an dicht gestellten Platten häufig noch eine weitere Plattenlage angeordnet werden, die jedoch eine andere Struktur aufweist, nämlich in Form zusammengeklebter kleiner Kunststoffkugeln, wobei das verbleibende Hohlraumvolumen als Entwässerungsvolumen dienen soll. Derartige Platten und auch die nach der US-A-4 309 855 haben ausserdem den Nachteil, dass sie aufgrund ihrer Kapillarwirkung Wasser regelrecht ansaugen und auch halten, so dass man solche Platten für den Zweck einer Drainage und einer gleichzeitigen Wärmedämmung nicht bzw. nur mit Nachteil einsetzen kann. Der weitere Stand der Technik ist durch folgende Druckschriften repräsentiert:

FR-A-2 473 262, DD-A-70 169, BE-A-863 519 und DE-A-2 640 065.

Die Plattenkörper dieser vorbekannten Isolierelemente werden einfach am zu isolierenden Baukörper gegeneinandergestossen aufgestellt, wobei sich zwangsläufig Stossfugen sowohl hinsichtlich der Plattenkörper als auch der Filtervliese ergeben, wenn man nicht das Filtervlies erst anschliessend als fortlaufende Bahn über allen aufgestellten Plattenkörpern anbringen will.

Der Erfindung liegt die Aufgabe zugrunde, das Isolierelement der eingangs genannten Art dahingehend zu verbessern, dass grundsätzlich zusätzliche Massnahmen hinsichtlich einer Drainage bei der Isolation der Kellergeschosswände entbehrlich werden, d.h., es soll ein auf einfache Weise weitgehend fortlaufend herstellbares Isolierelement für diesen Zweck geschaffen werden, das eine Doppelfunktion zu übernehmen in der Lage ist und Kiesschüttungen zur Drainage bzw. Sonderanfertigungen- und Sonderfertigung von drainagewirksamen Elementen ersetzt und dass bezüglich des abzuleitenden Wassers keine bzw. praktisch keine Saug- und Wasserhalteeigenschaften hat und wobei der Plattenkörper einschliesslich seines Filtervlieses so gestaltet sein soll, dass sich bei der Installation der Plattenkörper diese überlappend aneinander anschliessen lassen.

Diese Aufgabe ist mit einem Isolierelement der eingangs genannten Art nach der Erfindung durch die im Kennzeichen des Hauptanspruches angeführten Merkmale gelöst. Vorteilhafte Weiterbildungen ergeben sich nach den Unteransprüchen.

Ganz wesentlich ist zur Erfüllung der gestellten Aufgabe also die Verwendung von extrudiertem, verschäumten und partikelzwischenraumfreiem Kunststoff, bspw. nach Art der US-A-3 751 377 oder 3 960 792, da eine daraus hergestellte Platte die gewünschten Eigenschaften zeigt, nämlich weitgehend fortlaufend kontinuierliche Herstellbarkeit durch Extrudieren und praktisch keine Wassersaug- und Haltewirkung bei gleichzeitig guten Wärmeisolationseigenschaften. Weiterhin ist wesentlich, dass die Nuten, um die Extrudierbarkeit überhaupt zu ermöglichen und die Drainage des Wassers ausschliesslich nach unten überhaupt zu gewährleisten, in Extrusionsrichtung verlaufen und ebenso der eine Überstandsflansch und die zugehörige Flanschaufnahme auf der anderen Seite des Isolierelementes.

Das erfindungsgemässe Isolierelement wird, wie üblich, einfach gegen die zu isolierende Wandfläche gestellt, die insgesamt fliesenartig je nach ihrer Höhe und je nach Grösse der Plattenkörper mit solchen Einzelplatten zugestellt wird, wobei die Plattenkörper mit ihren vertikal verlaufenden Entwässerungsnuten und dem Filtervlies gegen den anstehenden Boden gerichtet sind. Man wird natürlich die Plattenkörper in Grössen herstellen, die hinsichtlich ihrer Verarbeitbarkeit und ihres Transportes am zweckmässigsten sind, also bspw. in Grössen von 1 × 2 m, d.h. Grössen, wie sie bei Bauplatten aller Art üblich sind, wobei die Plattenkörper einfach vom Extrusionsstrang in gewünschter Länge abgelängt werden.

Bei der fortlaufenden Extrudierung eines Plattenkörperstranges ist es ohne weiteres möglich, die Entwässerungseintiefungen bzw. Nuten im Querschnitt hinterschnitten auszubilden und auch an einem Längsrand Überstandsflansche und am gegenüberliegenden Längsrand entsprechende Flanschaufnahmen mit auszuformen.

Nach der DE-A-2 262 990 ist zwar eine Schutztafel für Grundmauern bekannt, wobei die Tafel aus einem verhältnismässig starren, formbeständigen Werkstoff besteht und auf einer Seite Vorsprünge zur Auflage gegen die Mauer od. dgl. zur Bildung von Lufträumen zwischen der Mauer und der Tafel aufweist. Die andere Seite der Tafel bildet eine Drainageschicht aus porösem Werkstoff, bspw. Glasfasermatten, Steinwolle, Schaumkunstwerkstoff od. dgl. In der praktischen Ausführungsform besteht also die ganze Isolierschicht in diesem Falle aus einer etwa wellblechartig geformten, wasserundurchlässigen Tafel aus bspw. Plastik, der darauf angeordneten Drainageschicht und einer auf dieser angeordneten gelochten Blechlage. Abgesehen vom beträchtlichen Herstellungs- und Materialaufwand, mag zwar die Drainagewirkung gegeben sein, die Wärmedämmwirkung ist aber praktisch nicht gegeben, da mit dieser Schutztafel eine Belüftung der Grundmauer angestrebt wird. Bei der Bauplatte nach der DE-A-2 640 065 handelt es sich um ein Element, das zwischen zwei Mauerwerksschalen angeordnet wird und lediglich der Wärmedämmung und Belüftung bzw. Kühlung dienen soll. Da die Bauplatte zwischen zwei Mauerwerksschalen angeordnet ist, kann die Bauplatte keine Drainage übernehmen, und für eine Drainage müssten zusätzliche Massnahmen aussen an der zweiten Mauerwerksschale vorgesehen werden. Die Fertigteilplatte nach der DD-A-70 169 ist ebenfalls weder als Grundmauernverblendung vorgesehen noch für eine Drainage bestimmt, sondern dient zur Erstellung von wärmedämmenden Wänden in Skelettbauweise für bspw. Kühlhäuser, Ställe usw.

Das erfindungsgemässe Isolierelement wird nachfolgend anhand der zeichnerischen Darstellung von Ausführungsbeispielen näher erläutert.

Es zeigt schematisch

Fig. 1 in Ansicht zwei benachbart angeordnete Isolierelemente in Plattenform;

Fig. 2 einen Horizontalschnitt längs Linie II–II in Fig. 1;

Fig. 3 einen Horizontalschnitt gemäss Fig. 2, aber mit einer anderen Querschnittsform;

Fig. 4 eine Ansicht mehrerer zusammengestellter Isolierelemente;

Fig. 5 eine Draufsicht auf die Elemente gemäss Fig. 4 und

Fig. 6 eine besondere Ausführungsform des Isolierelementes.

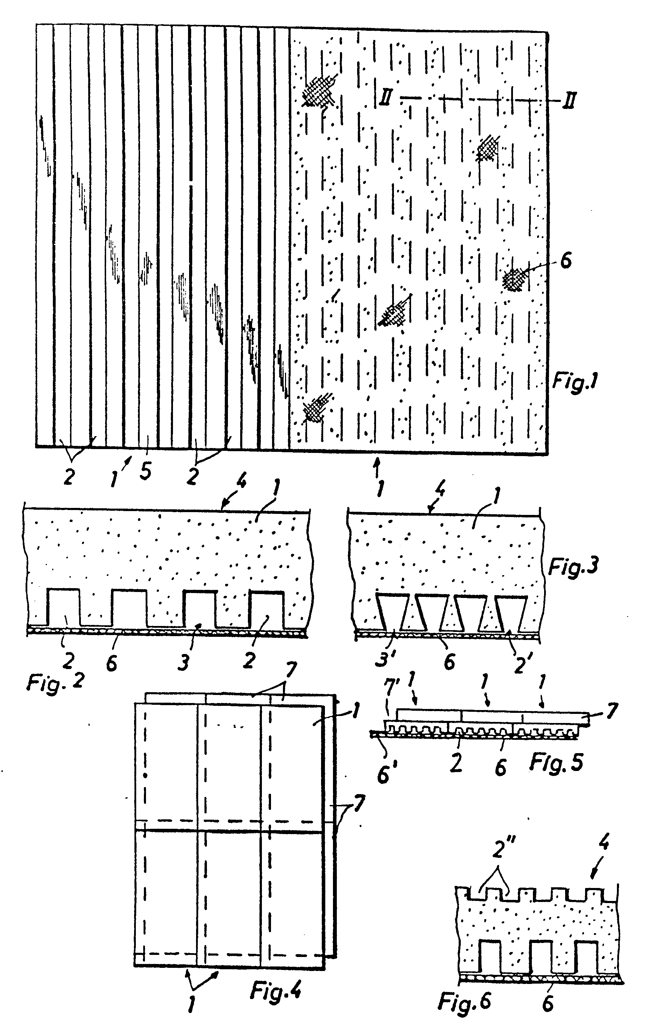

Bei den Plattenkörpern 1 gemäss Fig. 1, 2, wobei das eine in Fig. 1 ohne das Filtervlies dargestellt ist, sind die Entwässerungseintiefungen in Form von vertikal verlaufenden Nuten 2 ausgebildet, wobei die gesamte vernutete Fläche mit einem verrottungsfesten Filtervlies 6 abgedeckt ist, das bspw. aufgeklebt werden kann. Die Nuten können vorteilhaft in Form hinterschnittener Nuten 2' gemäss Fig. 3 ausgebildet sein, wodurch das Filtervlies besser gegen den anstehenden Boden abgestützt wird. Die Plattenkörper 1 werden mit ihrer wandseitigen Fläche 4 gegen die zu isolierende Wand gestellt und bspw. mit geeigneten Klebern verbunden. Vorteilhaft ist aus diesem Grunde der Plattenkörper 1 in der Fläche 4 mit bspw. kleineren Nuten (siehe Fig. 6) versehen, die die Haftfähigkeit mit einem Kleber (bspw. Bitumen) verbessert. Ausserdem hat diese wandseitige Vernutung den Vorteil, dass der extrudierte Plattenstrang verzugs-, also wölbungsfrei erkalten bzw. aushärten kann. Ferner sind die Plattenkörper 1 im Sinne der Fig. 4, 5 an jeweils zwei benachbarten Rändern mit Überstandsflanschen 7 und an den beiden anderen gegenüberliegenden Rändern mit entsprechenden Flanschaufnahmen 7' versehen, so dass sich die Plattenkörper 1 überlappend, wie dargestellt, einander zuordnen lassen. Gegenseitige Verklebungen in diesen Randbereichen sind ohne weiteres möglich, da die vernuteten Flächen 5 davon unberührt bleiben. Das Filtervlies 6 ist in entsprechender Zuschnittsgrösse auf dem jeweiligen Plattenkörper 1 im Sinne der Fig. 2 fest aufgebracht, wodurch ein insoweit fertig installierbares Element entsteht und im Sinne der Fig. 5 Vliesrandüberstände 6' vorhanden sind, die bei der Installation den jeweiligen Anschlussplattenkörper im Anschlussbereich überlappen, so dass die Anschlussfugen vom Filtervlies 6 ebenfalls überdeckt sind.

## Patentansprüche

1. Isolierelement für Unterboden-Kellergeschoss-Aussenwandverkleidungen, bestehend aus einer aus verrottungsfestem, verschäumten Kunststoff gebildeten Platte mit auf der wandfernen Seite mit in bezug auf die vertikale Plattenaufstellung vertikal verlaufend angeordneten Entwässerungsnuten (2) und vor der vernuteten Fläche angeordnetem, verrottungsfestem Filtervlies (6), dadurch gekennzeichnet, dass der Plattenkörper (1) aus extrudiertem und partikelzwischenraumfreiem Kunststoff gebildet ist, dass das Filtervlies (6) längs zweier benachbarter Ränder des Plattenkörpers (1), diesen überragend angeordnet und ausgebildet und dass der Plattenkörper (1) an zwei benachbarten Rändern mit einem Überstandsflansch (7) und auf den beiden anderen Seiten mit einer Flanschaufnahme (7') versehen ist.

2. Isolierelement nach Anspruch 1, dadurch gekennzeichnet, dass die Entwässerungseintiefungen in Form hinterschnittener Nuten (2') mit schmalen Öffnungsspalten (3') ausgebildet sind.

3. Isolierelement nach Anspruch 1 oder 2, dadurch gekennzeichnet, dass der Plattenkörper (1) auf der Wandanlageseite (4) Längsnuten (2'') aufweist.

## Claims

1. Insulating member for basement wall linings, comprising a rotproof, foamed plastic plate with vertically directed drainage slots (2) on the side remote from the wall and with respect to the vertical plate position and a rotproof filter fabric (6) located in front of the slotted surface, characterized in that the plate body (1) is made from extruded and particle gap-free plastic, that the filter fabric (6) is arranged along two adjacent edges of the plate body (1) so as to project over the same and that the plate body (1) is provided on two adjacent edges with a projecting flange (7) and on the two other sides with a flange mount (7').

2. Insulating member according to claim 1, characterized in that the drainage slots are in the form of undercut slots (2') with narrow opening gaps (3').

3. Insulating member according to claims 1 or 2, characterized in that the plate body (1) is provided on the wall engagement side (4) with longitudinal slots (2'').

## Revendications

1. Élément isolant pour revêtements extérieurs de mur de sous-sol, constitué par un panneau fait d'une matière plastique expansée, résistant au pourrissement, doté, sur son côté éloigné de la paroi, de rainures de drainage d'eau (2) aménagées de manière à être verticales lorsque le panneau est installé verticalement, et muni d'un voile filtrant (6) résistant au pourrissement, disposé devant la surface rainurée, caractérisé en ce que le corps de panneau (1) est fait de matière plastique extrudée et exempte d'interstices entre particules, en ce que le voile filtrant (6) est agencé de manière à déborder le long de deux bords voisins du corps de panneau (1), et en ce que le corps de panneau (1) est muni, sur deux bords voisins, d'un rebord (7) et, sur ses deux autres côtés, d'une feuillure (7') pour recevoir un tel rebord.

2. Élément isolant selon revendication 1, caractérisé en ce que les rainures de drainage d'eau sont réalisées sous forme de rainures (2') dotées de contre-dépouille et dont les ouvertures (3') forment des interstices étroits.

3. Élément isolant selon revendication 1 ou 2, caractérisé en ce que le corps de panneau (1) présente des rainures longitudinales (2'') sur le côté (4) venant au contact du mur.

Fig.1

Fig.2

Fig.3

Fig.4

Fig.5

Fig.6